# EUROPEAN PATENT APPLICATION

(11) **EP 4 752 832 A1**
(43) Date of publication of application: **03.06.2026**
(21) Application number: 24216053.9
(22) Date of filing: 28.11.2024
(51) Int. Cl.: G06T 7/11

(54) **METHODS AND SYSTEMS FOR CORONARY SEGMENTATION**

(71) Applicant: Koninklijke Philips N.V., 5656 AE Eindhoven (NL)
(72) Inventor: NICKISCH, Hannes, Eindhoven (NL); CAROLUS, Heike, Eindhoven (NL); PETERS, Jochen, 5656AG Eindhoven (NL); HEESE, Harald Sepp, Eindhoven (NL)
(74) Representative: Philips Intellectual Property & Standards

(57) **Abstract**

The present disclosure provides concepts for generating a coronary segmentation of a heart of a subject. In particular, a coronary angiography image of at least a part of the heart of the subject, and probabilistic maps describing expected paths of a plurality of vessels of the heart of the subject and expected vessel endpoint regions of the plurality of vessels, are obtained. A coronary segmentation is generated based on the coronary angiography image and the probabilistic maps, wherein the coronary segmentation represents a detected path of a plurality of vessels of the subject, and detected vessel endpoint regions of the plurality of vessels. Additionally, based on the probabilistic maps, and for vessels amongst the plurality of vessels of the coronary segmentation, a likelihood value is assigned that indicates whether the detected vessel endpoint of the respective vessel represents an actual endpoint location of the respective vessel.

## Description

### FIELD OF INVENTION

The present invention relates to coronary segmentation, and more particularly to systems and methods for generating a coronary segmentation based on a coronary angiography image of a heart of a subject.

### BACKGROUND OF INVENTION

Coronary angiography imaging (and particularly coronary computed tomography angiography, CCTA, imaging) is routinely and increasingly used for ruling out coronary artery disease (CAD). The coronary angiography diagnostic imaging procedure relies on administered contrast agent (such as iodine) to render the coronary arteries visible, as blood and vessel walls would not show any significant attenuation in the image to allow reliable stenosis assessment. The images show a steady state after a venous contrast injection.

Subsequent automatic image processing algorithms then locate the coronary artery tree in order to perform a reliable and reproducible assessment of the vessels. Stenotic regions show a narrowing of the vessel, and total occlusions can lead to the vessel to vanish from the coronary angiography image. That is, as no/little contrast agent can travel past the occlusion, the vessel may be rendered invisible in the image. Only collateral filling may lead to the respective vessel being faintly visible in the image. At the same time, any coronary artery can only be identified in the coronary angiography image for a finite length.

Recently, coronary angiography has been established as a standard, first-line testing procedure for subjects without a history of CAD. Thus, automatic image analysis of the coronary angiography image is becoming increasingly important. Combined with the occlusion problem, there is clearly an increasing need for improved image processing methods for coronary angiography images.

### SUMMARY OF INVENTION

The invention is defined by the claims.

According to an aspect of the present disclosure, a method for generating a coronary segmentation of a heart of a subject is provided.

The method comprises: obtaining a coronary angiography image of at least a part of the heart of the subject; obtaining probabilistic maps describing expected paths of a plurality of vessels of the heart of the subject, and expected vessel endpoint regions of the plurality of vessels; generating a coronary segmentation based on the coronary angiography image and the probabilistic maps, wherein the coronary segmentation represents a detected path of a plurality of vessels of the subject, and detected vessel endpoint regions of the plurality of vessels; and assigning, based on the probabilistic maps, for vessels amongst the plurality of detected vessels of the coronary segmentation, a likelihood value indicating whether the detected vessel endpoint of the respective vessel represents an actual endpoint location of the respective vessel.

It is often the case in coronary angiography imaging that certain vessels may not be fully visible in the image. This may be due, for example, to subject movement, image artifacts, and/or occlusion of the vessel. Occlusion of the vessel is particularly problematic, as the contrasting agent cannot propagate to the end of the vessel, rendering the vessel difficult to see in the image. As these vessels are often of the greatest diagnostic interest, it is important that a coronary segmentation properly identifies and images these vessels.

Thus, it is proposed to take advantage of probabilistic maps that describe likely/expected paths of the vessels. These probabilistic maps may indicate where vessels may be expected to be found in the coronary angiography image. Accordingly, if the resulting coronary segmentation of the coronary angiography image presents vessels that deviate greatly from the likely paths of vessels as described by the probabilistic maps, the segmentation may be altered and endpoints of vessels that deviate from expected endpoint locations may be flagged.

This method provides an improved approach to coronary segmentation by incorporating probabilistic information about vessel paths and endpoints. To this end, the coronary segmentation may be guided by the probabilistic information, and/or the output of the coronary segmentation may be augmented. In any case, the use of probabilistic maps enhances the accuracy of vessel detection and endpoint identification, potentially in the case of occluded vessels, potentially reducing errors in coronary artery analysis.

The likelihood value assigned to vessels may be particularly useful for clinicians to quickly and accurately gather an understanding of the coronary segmentation. For example, if said assigned likelihood values indicate that the detected vessel endpoints represent the actual endpoint locations, then it may be assumed that the vessels are not occluded and that an accurate segmentation has been obtained. If one or more likelihood values indicate that the detected vessel endpoints do not accurately reflect the actual endpoint locations (e.g., because the detected vessel endpoints contradict the probabilistic maps), then it may be assumed that one or more of the vessels have been occluded. Subsequent analysis and diagnosis of the coronary condition of the subject may then be performed on the basis of these assumptions.

The method may further comprise generating the probabilistic maps.

As the probabilistic maps may be considered central to various embodiments of the invention, these may be generated prior to use in guiding the segmentation and assigning of the likelihood values. In alternative cases, the probabilistic maps may be retrieved from a repository of probabilistic maps, or a highly generalised probabilistic map may be used.

In some cases, the generation may allow for customization of the probabilistic information based on specific patient characteristics or imaging conditions. This may improve the accuracy of the probabilistic maps, and thus accuracy of the subsequent segmentation and assigned likelihood values.

In some embodiments, generating the probabilistic maps may be based on a coronary atlas describing probable paths of the plurality of vessels of the heart, and probable vessel endpoint regions of the plurality of vessels.

The use of a coronary atlas provides a standardized reference for vessel paths and endpoints, improving the consistency and reliability of the segmentation process. Of course, there is significant variability in vessel paths and endpoints between individuals, which is accounted for by the coronary atlas. Nevertheless, vessels typically follow similar paths and start in similar locations, particularly for similar individuals. Accordingly, the probabilistic map may be generated by filtering the generalised coronary atlas based on a variety of parameters relevant to the particular coronary segmentation to be performed. The coronary atlas thus indicates a range of locations where vessels may be found, including the region where such vessels start, the region where such vessels end, the paths that may be followed between the start and the end, and the size/widths of the vessel along its length.

The method may include processing the coronary atlas using the coronary angiography image.

This step allows for patient-specific adaptation of the atlas information, potentially improving the accuracy of the probabilistic maps that are generated using the processed coronary atlas for individual cases. The coronary angiography image may indicate, with a high degree of confidence, certain aspects of the vessels. This may be used to filter the coronary atlas to provide a coronary atlas exemplifying the variety of probable paths and endpoints of the vessels for the particular subject.

In an embodiment, the method may further comprise generating a coronary atlas by mapping a dataset of a plurality of hearts of a population onto a common coordinate system, each item in the dataset describing paths of a plurality of vessels and vessel endpoint regions of the plurality of vessels. This approach enables the creation of a comprehensive and statistically robust atlas, enhancing the overall performance of the segmentation method.

According to an embodiment, generating the probabilistic maps may be based, at least in part, on a location of one or more grafts of the heart of the subject.

Grafts provide significant clues as to the presence of certain vessels, as well as the endpoints of vessels. Leveraging this information is therefore vital for appreciating whether the coronary angiography image accurately and fully depicts the vessels of the heart, and thus for generating an accurate segmentation. Thus, the probabilistic map in this case is altered based on such information to more accurately reflect the actual paths and endpoints of vessels of the heart. Generally, this feature allows the method to account for anatomical variations due to surgical interventions, potentially improving segmentation accuracy in subjects with grafts.

Specifically, the method may include identifying the location of the grafts in the coronary angiography image. For example, the location of grafts may be identified based on the location of an aortic protrusion, a direction of a left/right internal mammary artery, and/or a direction of a left/right internal thoracic artery. Each of these may be determined from the coronary angiography image. This step thus enables automatic detection and incorporation of graft information, reducing the need for manual input and potentially improving workflow efficiency.

Furthermore, in some embodiments, generating the probabilistic maps may be based on a location of one or more metal clips in the heart of the subject.

Surgical clips also provide significant clues as to the presence and endpoints of vessels and may also impact the image quality and visibility of vessels in coronary angiography scans. Metal clips may often indicate the presence of a coronary artery bypass graft. Thus, similarly to the graft information, leveraging information related to clips is vital for appreciating whether the coronary angiography image accurately and fully depicts the vessels of the heart, and thus for generating an accurate segmentation. Thus, the probabilistic map in this case is altered based on such information to more accurately reflect the actual paths and endpoints of vessels of the heart.

In particular, embodiments of the method may include identifying the location of the metal clips in the coronary angiography image. For example, the location of a metal clip may be identified based on the occurrence of high intensity (i.e., bright) elements in the coronary angiography image. This step thus enables automatic detection and incorporation of metal clip information, reducing the need for manual input and potentially improving workflow efficiency.

In some embodiments, assigning the likelihood value for the plurality of detected vessels may comprise comparing the detected vessel endpoint of the respective vessel to the expected vessel endpoint region of the respective vessel, and generating the likelihood value based on a result of the comparison.

This approach provides a quantitative measure of confidence in the detected vessel endpoints, potentially aiding in the identification of segmentation errors or anatomical variations.

In some embodiments, generating the coronary segmentation may comprise processing, with a segmentation algorithm, the coronary angiography image to generate the coronary segmentation. The segmentation algorithm may be modified based on the probabilistic maps and/or the coronary segmentation of the heart is modified based on the probabilistic maps.

The integration of probabilistic information into the segmentation process can lead to more accurate and robust results. This may be achieved in two ways. Namely, parameters of the segmentation algorithm itself may be altered to account for information provided by the probabilistic map. Alternatively (or in addition), the resulting coronary segmentation produced by the segmentation algorithm may be altered to account for information provided by the probabilistic map.

The segmentation algorithm may be based on at least one of tracing, region growing, or voxel classification. These established segmentation techniques, when combined with probabilistic information, can potentially yield improved results compared to their standard implementations.

The coronary angiography image may be a spectral CT image or a photon counting CT image.

The use of advanced CT imaging techniques can provide higher quality input data, potentially enhancing the overall accuracy of the coronary segmentation method. Furthermore, these technologies offer additional features, which may facilitate the generation of more reliable probabilistic maps.

According to another aspect of the present disclosure, a computer program comprising computer program code means adapted, when said computer program is run on a computer, to implement the method described above is provided.

According to another aspect of the present disclosure, a system for augmenting a coronary segmentation of a heart of a subject is provided. The system comprises: an interface unit configured to obtain a coronary angiography image of at least a part of the heart of the subject and obtain probabilistic maps describing expected paths of a plurality of vessels of the heart of the subject, and expected vessel endpoint regions of the plurality of vessels; a segmentation unit configured to generate a coronary segmentation based on the coronary angiography image and the probabilistic maps, wherein the coronary segmentation represents a detected path of a plurality of vessels of the subject, and detected vessel endpoint regions of the plurality of vessels; and an annotation unit configured to assign, based on the probabilistic maps, for vessels amongst the plurality of detected vessels of the coronary segmentation, a likelihood value indicating whether the detected vessel endpoint of the respective vessel represents an actual endpoint location of the respective vessel.

These and other aspects of the invention will be apparent from and elucidated with reference to the embodiment(s) described hereinafter.

### BRIEF DESCRIPTION OF THE DRAINGS

For a better understanding of the invention, and to show more clearly how it may be carried into effect, reference will now be made, by way of example only, to the accompanying drawings, in which:
Fig. 1 illustrates a perspective view of an example probabilistic coronary atlas;
Fig. 2A is a surface rendering of a CCTA image of a portion of a heart including clues as to the location of grafts;
Fig. 2B is a double oblique MPR slice view of a CCTA image of a portion of a heart including a clue as to the location of grafts;
Fig. 2C is a double oblique MPR slice view of a CCTA image of a portion of a heart including clues as to the location of metal clips;
Fig. 3 illustrates a flowchart for a method of generating a coronary segmentation of a heart, according to aspects of the present disclosure.
Fig. 4 illustrates a flowchart for generating probabilistic maps for coronary segmentation, according to an embodiment.
Fig. 5 illustrates a block diagram of a system for generating a coronary segmentation of a heart, according to aspects of the present disclosure.
Fig. 6 is a simplified block diagram of a computer within which one or more parts of an embodiment may be employed.

### DETAILED DESCRIPTION OF EMBODIMENTS

The invention will be described with reference to the Figures. It should be understood that the Figures are merely schematic and are not drawn to scale. It should also be understood that the same reference numerals are used throughout the Figures to indicate the same or similar parts.

It should also be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to provide an advantage.

The present disclosure provides concepts for generating a coronary segmentation of a heart of a subject. In particular, a coronary angiography image of at least a part of the heart of the subject, and probabilistic maps describing expected paths of a plurality of vessels of the heart of the subject and expected vessel endpoint regions of the plurality of vessels, are obtained. A coronary segmentation is generated based on the coronary angiography image and the probabilistic maps, wherein the coronary segmentation represents a detected path of a plurality of vessels of the subject, and detected vessel endpoint regions of the plurality of vessels. Additionally, based on the probabilistic maps, and for vessels amongst the plurality of detected vessels of the coronary segmentation, a likelihood value is assigned that indicates whether the detected vessel endpoint of the respective vessel represents an actual endpoint location of the respective vessel.

In other words, the present disclosure relates to systems and methods for generating coronary segmentations based on coronary angiography images. In particular, the disclosure provides approaches for improving vessel detection and endpoint identification in coronary angiography images through the use of probabilistic maps. Coronary segmentation systems may utilize coronary angiography images to detect and analyse coronary arteries. In some aspects, probabilistic maps describing expected paths and endpoint regions of coronary vessels may be incorporated into the segmentation process. The probabilistic maps may enhance the accuracy of vessel detection and endpoint identification.

The present disclosure thus provides an innovative approach to coronary segmentation by leveraging probabilistic information about vessel paths and endpoints. By incorporating probabilistic maps describing expected paths and endpoint regions of coronary vessels, the method enhances the accuracy and reliability of vessel detection and endpoint identification in coronary angiography images. More specifically, disclosed embodiments may help to overcome issues in imaging partially or totally occluded vessels.

Proposed concepts utilize a combination of coronary angiography imaging data and probabilistic maps to generate a comprehensive coronary segmentation. This segmentation represents detected paths and endpoint regions of multiple vessels in the subject's heart. A key feature of the invention is the assignment of likelihood values to detected vessel endpoints, indicating the probability that each endpoint represents the actual termination point of the vessel. Accordingly, in locations where it is suspected that the detected vessel endpoint in the coronary angiography image is not a true vessel endpoint (due to occlusion of the vessel, for example), this may be marked so that clinicians are provided with a more complete appreciation of the segmentation.

One of the primary ideas leveraged by this invention is the use of a coronary atlas, which provides a standardized reference for probable vessel paths and endpoints. This atlas can be customized based on patient-specific characteristics or imaging conditions, allowing for more accurate segmentation across diverse patient populations. The method also accounts for anatomical variations due to surgical interventions, such as coronary artery bypass grafts, by incorporating information about graft locations and metal clips. Each of these factors may be taken into account when (i) segmenting the coronary angiography image; and (ii) when assigning likelihood values to vessel endpoint locations.

Embodiments may offer several advantages over existing coronary segmentation methods. By integrating probabilistic information into the segmentation process, it potentially reduces errors in coronary artery analysis, particularly in cases where vessel occlusions or image artifacts may complicate traditional segmentation approaches. The method's ability to adapt to patient-specific anatomical variations and surgical modifications enhances its versatility and clinical applicability.

More particularly, proposed is a system that may be able to indicate location of totally occluded (and hence only partially visible in coronary angiography images) coronary arteries. The vessels are located and traced (i.e., segmented) in coronary angiography images with the help of supporting clues specific to coronary arteries and/or coronary bypass grafts (CABGs). Clues may include coronary atlas' (atlas-based most probable locations), clips, anastomosis points, and orientation of internal mammary arteries. Once a complete coronary segmentation is generated, it may be useful for vessel tree graft patency assessment, automatic CAD rule-out, and standardised reporting using the CAD-RADS standard.

To reiterate, the coronary angiography diagnostic imaging procedure relies on administered contrast agent that renders coronary arteries visible in the coronary angiography image (by increasing attenuation of the vessels). However, where there is narrowing or total occlusions of the vessels, the contrast agent may not travel through the whole length of the vessel. As a result, the vessels may not be completely visible in the coronary angiography image. Therefore, locations of flow impediment are algorithmically challenging to find, whilst also being the most diagnostically relevant vessels to consider. Image analysis techniques must therefore distinguish blockage of blood flow from natural vessel termination. The same problem is also present in follow-up exams to cardiac bypass surgery, as CABG patency assessment is very challenging and in first-line testing, highly stenotic coronary regions are particularly difficult to assess.

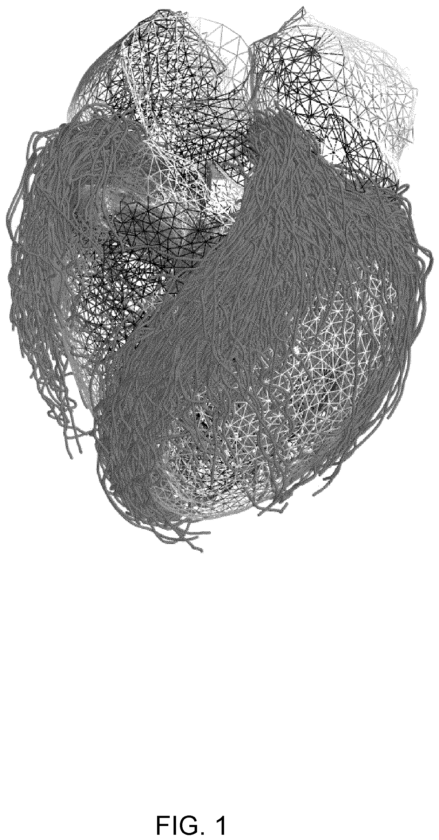

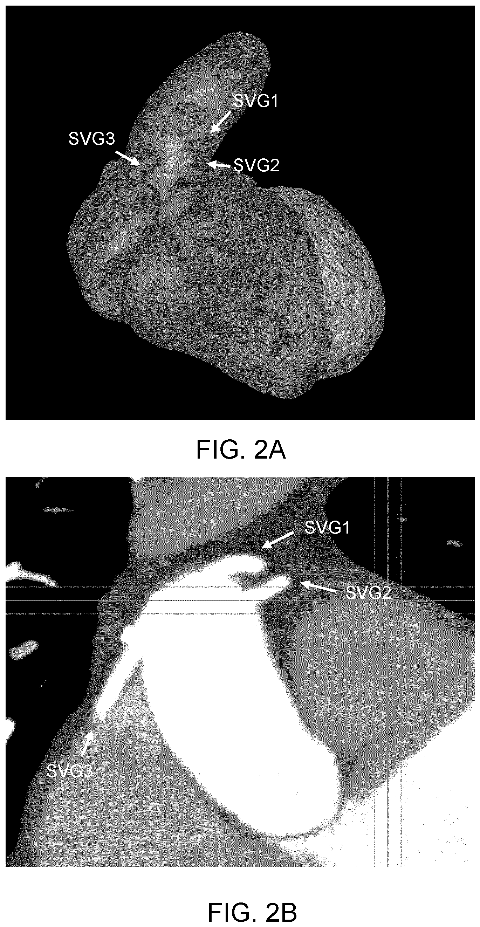

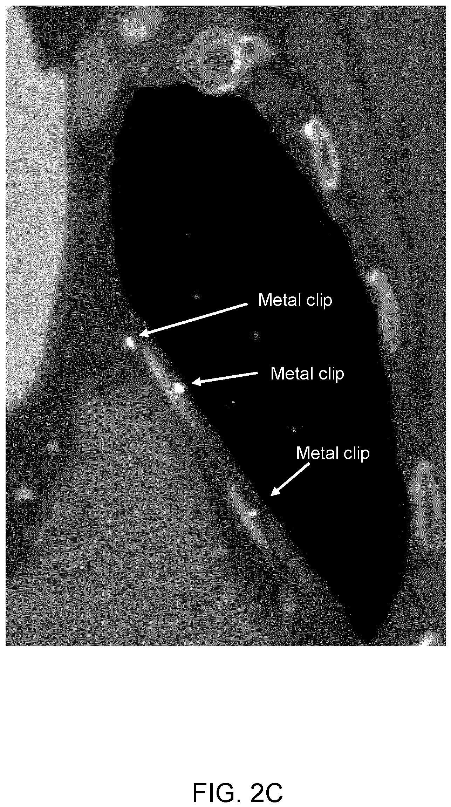

Accordingly, it is proposed to guide the segmentation of the coronary angiography image (as well as subsequent coronary analysis) based on various clues regarding the presence of vessels that are not completely visible in the coronary angiography image (e.g., due to vessel occlusion). Said clues may include:
- A probabilistic coronary atlas describing probable paths of the plurality of vessels of the heart, and probable vessel endpoint regions of the plurality of vessels. The coronary atlas may be configured to predict the most probable location of a coronary as well as some statistics regarding the expected size and depth of the coronary tree. An example coronary atlas is presented in Fig. 1 laid over a mesh depicting a generalised heart. Each line in Fig. 1 depicts a different potential vessel path;
- The location of grafts, which lead to occlusion of vessels. Grafts may be identified in a coronary angiography image in the form of aortic protrusions, hinting at anastomosis points, as present in case of existing saphenous vein grafts (SVG) or radial artery (RA) grafts. Fig. 2A depicts an example of a coronary computed tomography angiography (CCTA) 3D surface rendering that indicates the presence of grafts. Specifically, Fig. 2A shows circular spots indicated by items SVG1, SVG2, and SVG3 along the ascending aorta, which are clues with regard to the presence of multiple coronary artery bypass grafts. Fig. 2B depicts a corresponding double oblique MPR slice view of the CCTA of Fig. 1. Three bright protrusions can be seen, indicated by items SVG1, SVG2, and SVG3, which indicate the presence of grafts. Further, grafts may be identified by the direction of left/right internal mammary artery (L/RIMA) or left/right internal thoracic artery (L/RITA), which may indicate the presence of a LIMA/RIMA graft; and
- The location of metal clips, which indicates the presence of a CABG. Metal clips may be identified in a coronary angiography image as high-intensity bean shaped objects. Fig. 2C depicts an example of a double oblique slice view of a CCTA image of a subject with an internal mammary artery bypass graft that indicates the presence of metal clips. Specifically, Fig. 2C shows the internal mammary artery bypass graft which is attached to medistinal region by means of three metal clips, which present as bright bean shaped objects.

Thus, it is proposed to process these clues to guide the segmentation process (based on tracing, region growing, voxel classification, etc.), and/or to enhance the segmentation output by providing a likelihood score indicating the chance of termination of the vessel due to typical or atypical anatomic behaviour of the vessel.

Disclosed embodiments therefore potentially provide a more accurate segmentation, particularly for visually challenging coronary arteries. Specifically, in the presence of patient motion (e.g. due to the beating heart), image artifacts (metal clips, etc.) or low contrast (e.g., due to bad injection timing, or a very low dose scan), coronaries shall be segmented more robustly. Strong calcifications and/or stents can also potentially be better segmented. Lesions with higher flow impediment should be more accurately presented in the segmentation. Graft patency assessment may also benefit from the approach.

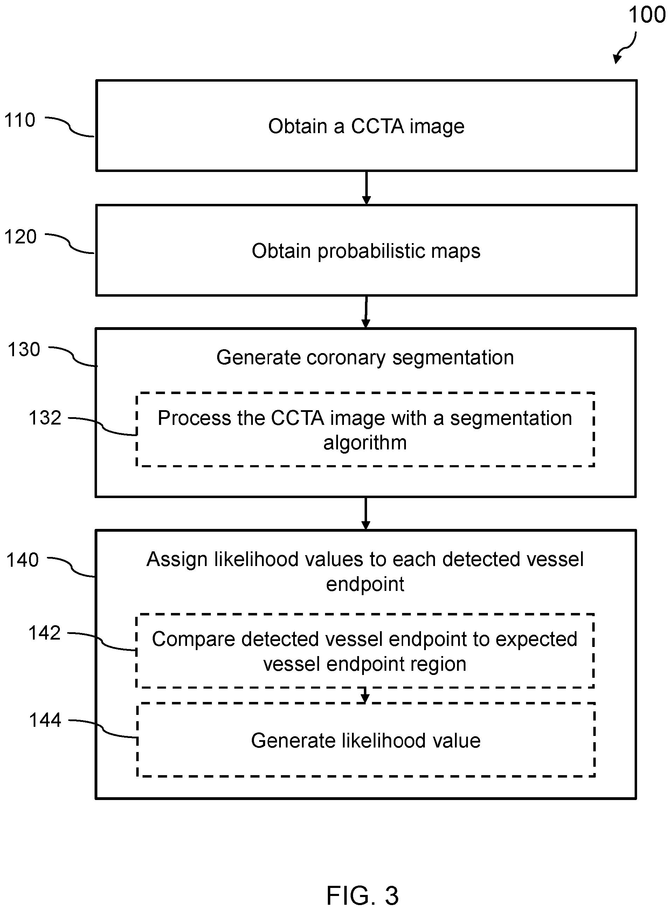

Referring to Fig. 3, there is presented a flowchart that illustrates a method for generating a coronary segmentation of a heart of a subject. To be clear, a coronary segmentation is a map of the arteries that surround and/or supply the heart, which is derived from an image of the heart.

For sake of clarity, the methods and systems discussed below generate a coronary segmentation based on a coronary computed tomography angiography (CCTA) image. A CCTA image is coronary angiography image that utilizes CT for image acquisition. Nevertheless, while the disclosed methods are particularly advantageous for CCTA images, it is foreseen that the invention can be applied broadly. In other words, whilst segmentation based on a CCTA image is a preferred embodiment, teachings of this preferred embodiment can be similarly applied to any image acquired using the injection of a contrast agent, such as coronary MR angiography images or coronary SPECT perfusion angiography images.

In step 110, a CCTA image of at least a part of the heart of the subject is obtained. A CCTA image is acquired by use of an injected contrast material and CT scanning to examine the arteries that supply blood to the heart. A CCTA image is usually acquired to determine whether the arteries have been narrowed. The CCTA image therefore provides detailed information about the coronary arteries and surrounding cardiac structures.

In some images, the CCTA image may be a spectral CT image or a photon counting CT image. Spectral CT imaging utilizes multiple x-ray energy levels to provide enhanced tissue characterization and material decomposition capabilities. Photon counting CT detectors may enable improved spatial resolution and reduced noise compared to conventional CT systems. These advanced imaging techniques may provide higher quality input data for the coronary segmentation process, potentially leading to more accurate vessel detection and endpoint identification.

In step 120, probabilistic maps describing expected paths of a plurality of vessels of the heart and expected vessel endpoint regions of each of the plurality of vessels are obtained. In other words, the probabilistic maps describe regions where the vessels of the heart are expected to be, and regions where they are expected to end. Due to the variety and unpredictable nature of the vessels, the precise location of the vessels and endpoints may not be known without imaging. However, generalised start points, end points, and paths therebetween may be known and represented by the probabilistic maps.

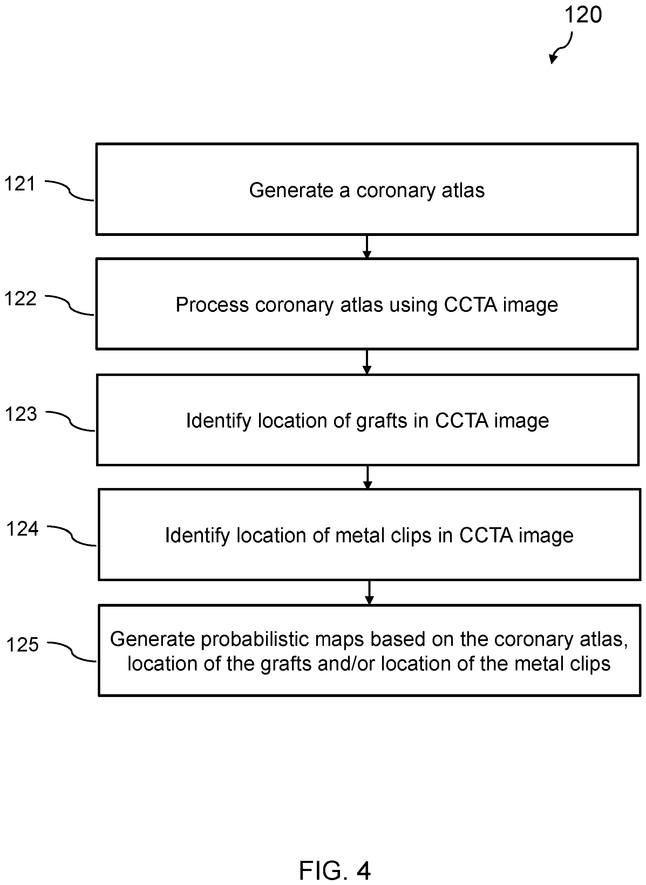

These probabilistic maps may be generated based on statistical data from a population of heart images or may be derived from patient-specific information. The probabilistic maps may be based on various clues, such as coronary atlas, graft locations and/or metal clip locations. Generation of the probabilistic maps will be outlined in more detail in reference to Fig. 4. Nevertheless, in some embodiments, the probabilistic maps may be pre-generated, and therefore are simply retrieved from database.

In step 130, a coronary segmentation is generated based on the CCTA image and the probabilistic maps. The coronary segmentation represents at least detected (i.e., imaged) paths of a plurality of vessels of the subject and detected (i.e., imaged) vessel endpoint regions of each of the plurality of vessels. In some aspects, the segmentation process may involve analysing the CCTA image data in conjunction with the probabilistic information to identify and delineate the coronary vessels. Thus, the probabilistic information is used to guide the segmentation process.

Within step 130, a sub-step 132 involves processing the CCTA image with a segmentation algorithm. The segmentation algorithm may incorporate the probabilistic map information to guide the vessel detection and segmentation process.

That is, the generation of the coronary segmentation in step 130 may involve processing the CCTA image with a segmentation algorithm. In some aspects, this segmentation algorithm may be modified based on the probabilistic maps obtained in step 120. The modification of the segmentation algorithm may allow for more accurate detection of vessel paths and endpoints by incorporating prior knowledge about the expected coronary anatomy.

For example, the segmentation algorithm may use the probabilistic maps to guide the vessel tracking process. The algorithm may preferentially follow paths that align with high-probability regions in the probabilistic maps. Similarly, the algorithm may be more likely to terminate vessel tracking in areas that correspond to high-probability endpoint regions in the maps, or to continue vessel tracking in areas that correspond to low-probability endpoint region in the maps, but that appear to represent the endpoint in the CCTA image.

In some cases, the coronary segmentation itself may be modified based on the probabilistic maps after initial generation. This post-processing step may involve adjusting detected vessel paths or endpoints to better align with the expected anatomy described by the probabilistic maps. Such adjustments may help to correct potential errors or inconsistencies in the initial segmentation results.

In some aspects, the segmentation algorithm used to generate the coronary segmentation is based on tracing, region growing, or voxel classification techniques. Tracing algorithms may follow the path of vessels by analysing intensity gradients and connectivity in the CCTA image. Region growing approaches may start from seed points within vessels and iteratively expand the segmented region based on intensity similarities. Voxel classification methods may use machine learning models (e.g., convolutional neural networks, CNN) to categorize individual voxels as belonging to vessel or non-vessel structures.

The segmentation algorithm may be modified based on the probabilistic maps to improve accuracy. For example, the algorithm may adjust vessel tracing parameters or region growing thresholds in areas where the probabilistic maps indicate a high likelihood of vessel presence. Alternatively, the coronary segmentation results may be refined post-processing by incorporating information from the probabilistic maps.

Following the generation of the coronary segmentation, the method moves to step 140, where likelihood values are assigned for each of the plurality of detected vessels of the coronary segmentation. These likelihood values indicate whether the detected vessel endpoint of the respective vessel represents an actual endpoint location of the respective vessel. The assignment of likelihood values is based on the probabilistic maps, which provide information about the expected locations of vessel endpoints.

Step 140 includes two sub-steps. In sub-step 142, the detected vessel endpoint of the respective vessel is compared to the expected vessel endpoint region of the respective vessel. In some aspects, the comparison between detected and expected vessel endpoints may be performed using various metrics. For example, the system may calculate the spatial distance between the detected endpoint and the centre or boundary of the expected endpoint region. Alternatively, the system may evaluate the overlap between a region surrounding the detected endpoint and the expected endpoint region.

In sub-step 144, the likelihood values are generated based on the result of this comparison. The likelihood value may indicate the probability that the detected endpoint represents an actual anatomical endpoint of the vessel. In some cases, the likelihood value may be expressed as a numerical score or a categorical rating.

Referring to Fig. 4, there is presented a flowchart illustrating a process for generating probabilistic maps for coronary segmentation. As outlined above, the probabilistic maps may be generated and/or modified based on various clues, such as using a coronary atlas, graft locations and metal clip locations. Each of these factors will be considered in the method of Fig. 4. However, it will be appreciated that only some of these factors may be considered in some cases. Of course, additional factors may also be considered when generating the probabilistic maps.

In step 121, a coronary atlas is generated. The coronary atlas describes probable paths of each of a plurality of vessels of the heart, and probable vessel endpoint regions of each of the plurality of vessels. For example, the coronary atlas may describe a range of possible paths and endpoints for each of the left anterior descending (LAD) artery, left circumflex (LCx) artery, the right coronary artery (RCA), etc. The coronary atlas may further describe a distribution profile of the paths and endpoints.

In one case, the coronary atlas may be generated by mapping a dataset of a plurality of hearts of a population onto a common coordinate system. Each item in the dataset may describe paths of a plurality of vessels and vessel endpoint regions of each of the plurality of vessels. This approach allows for the creation of a standardized representation of cardiac vasculature across multiple subjects.

Furthermore, the coronary atlas may also describe probable locations of grafts in the heart and/or probable locations of metal clips in the heart. Indeed, grafts and metal clips are often provided in similar locations between subjects. The coronary atlas may be generated, in this instance, at least partially based on population information related to such grafts and metal clips.

In step 122, the coronary atlas is processed using a CCTA image. This step may adapt the generalized information from the coronary atlas to the specific anatomy of the subject being analysed. The CCTA image provides patient-specific data that can be used to refine and customize the probabilistic maps. Of course, the coronary atlas may be processed using further subject characteristic data. For example, the coronary atlas may be processed/filtered based on subject demographic information, subject conditions, and subject health.

In other words, processing the coronary atlas includes filtering, adapting and otherwise modifying the generalised coronary atlas (describing probable paths, endpoints, etc. for a population) to generate a coronary atlas that is personalised to the subject. To this end, the CCTA image provides information that may be used to process the coronary atlas, such as definite start points of certain vessels, and definite paths of certain vessels.

In step 123, the location of one or more grafts of the heart may be identified in the CCTA image. The system may analyse the CCTA image to identify the location of grafts, such as saphenous vein grafts or internal mammary artery grafts. Such grafts may be identified in the form of shadowed regions of the CCTA image volume, or as bulging features in a slice. Alternatively, the location of the grafts may be determined from another data source, such as from EMR or from a user input.

In the case that the coronary atlas also describes probable locations of grafts in the heart, step 123 may utilise the coronary atlas. That is, the identification of the location of the grafts may be based on the coronary atlas. To this end, the coronary atlas may aid in localizing the area of the CCTA image to search for indications of, or hints regarding, the presence of grafts.

In step 124, the location of one or more metal clips in the heart of the subject may be identified in the CCTA image. Such metal clips may be identified in the form of intense bright, regions in the CCTA image volume. Generally, the location of metal clips in the CCTA image may be identified through various image processing techniques. These may include analysing areas of high density or specific patterns characteristic of surgical clips. Alternatively, the location of the metal clips may be determined from another data source, such as from EMR or from a user input.

In the case that the coronary atlas also describes probable locations of metal clips in the heart, step 124 may utilise the coronary atlas. That is, the identification of the location of the metal clips may be based on the coronary atlas. To this end, the coronary atlas may aid in localizing the area of the CCTA image to search for indications of, or hints regarding, the presence of metal clips.

In step 125, probabilistic maps may be generated based on the processed coronary atlas. These maps describe expected paths of a plurality of vessels of the heart of the subject and expected vessel endpoint regions of each of the plurality of vessels. The probabilistic maps incorporate both the generalized anatomical information from the coronary atlas and the patient-specific details from the CCTA image.

Information regarding the location of the grafts may be used to adjust the probabilistic maps, accounting for the altered vascular anatomy resulting from the grafting procedure. In some cases, the system may identify the location of an aortic protrusion, which may indicate the site of graft attachment to the aorta. Additionally, the direction of left or right internal mammary arteries or internal thoracic arteries may be analysed to further refine the probabilistic maps. These arteries are commonly used as grafts in coronary bypass procedures, and their paths may provide valuable information about the expected routes of grafted vessels.

In some aspects, the generation of probabilistic maps may also take into account the location of the metal clips. Metal clips are often used during cardiac surgeries, including bypass procedures, and their presence can provide important contextual information about the vascular anatomy. The positions of identified clips may be used to adjust the probabilistic maps, potentially indicating areas where vessels have been surgically manipulated or redirected.

By incorporating information about grafts and metal clips, the generated probabilistic maps may more accurately reflect the individual patient's cardiac anatomy, particularly in cases of previous surgical intervention. This enhanced accuracy may lead to improved coronary segmentation results, especially in complex cases where standard anatomical assumptions may not apply.

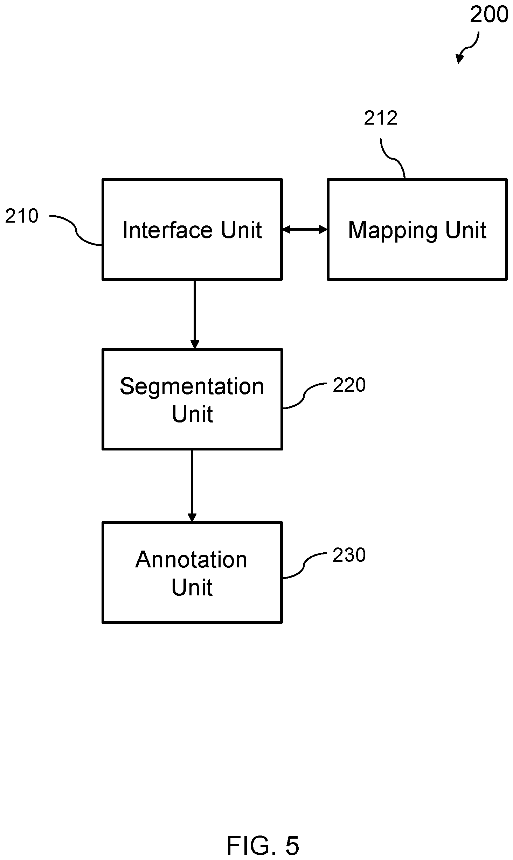

Referring to Fig. 5, a block diagram illustrates a system 200 for augmenting a coronary segmentation of a heart of a subject.

The system 200 includes an interface unit 210 configured to obtain a CCTA image of at least a part of the heart of the subject. The interface unit 210 is also configured to obtain probabilistic maps describing expected paths of a plurality of vessels of the heart of the subject and expected vessel endpoint regions of each of the plurality of vessels. In some aspects, the interface unit 210 may receive the CCTA image and probabilistic maps from external sources or generate them internally.

Connected to the interface unit 210 is a segmentation unit 220. The segmentation unit 220 is configured to generate a coronary segmentation based on the CCTA image and the probabilistic maps received from the interface unit 210. The coronary segmentation represents a detected path of a plurality of vessels of the subject, and detected vessel endpoint regions of each of the plurality of vessels. In some cases, the segmentation unit 220 may employ various image processing techniques to identify and delineate the coronary vessels within the CCTA image.

Following the segmentation unit 220 is an annotation unit 230. The annotation unit 230 is configured to assign, based on the probabilistic maps, for each of the plurality of detected vessels of the coronary segmentation, a likelihood value indicating whether the detected vessel endpoint of the respective vessel represents an actual endpoint location of the respective vessel. In some aspects, the annotation unit 230 may compare the detected vessel endpoint regions to the expected endpoint regions provided by the probabilistic maps to determine these likelihood values.

The resulting coronary segmentation and the assigned likelihood values may then be output to the user, and/or stored for future reference. This improved segmentation may help to improve efficiency and accuracy of coronary analysis processed, potentially improving outcomes for subjects.

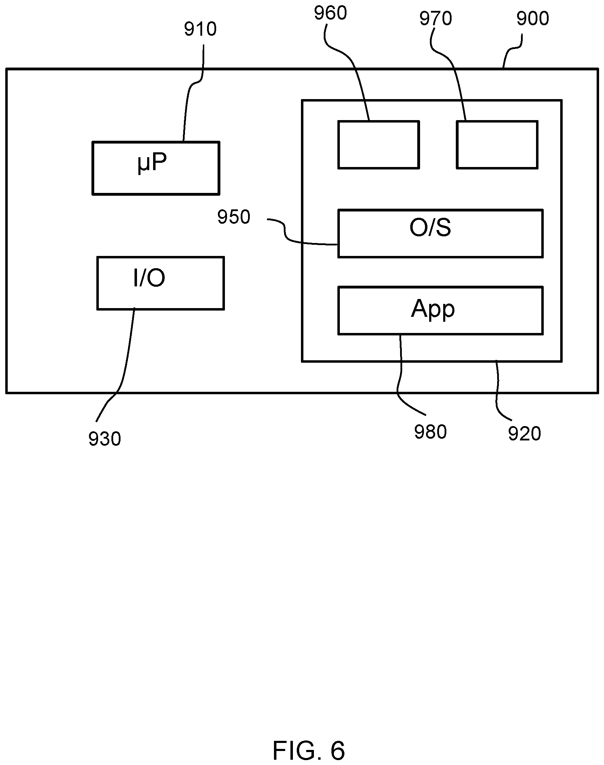

Fig. 6 illustrates an example of a computer 900 within which one or more parts of an embodiment may be employed. Various operations discussed above may utilize the capabilities of the computer. For example, one or more parts of a proposed embodiment may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 900 includes, but is not limited to, PCs, workstations, laptops, PDAs, palm devices, servers, storages, and the like. Generally, in terms of hardware architecture, the computer 900 may include one or more processors 910, memory 920 and one or more I/O devices 930 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 910 is a hardware device for executing software that can be stored in the memory 920. The processor 910 can be virtually any custom made or commercially available processor, a central processing unit (CPU), a digital signal processor (DSP), or an auxiliary processor among several processors associated with the computer 900, and the processor 910 may be a semiconductor-based microprocessor (in the form of a microchip) or a microprocessor.

The memory 920 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 920 may incorporate electronic, magnetic, optical, and/or other types of storage media. Note that the memory 920 can have a distributed architecture, where various components are situated remote from one another, but can be accessed by the processor 910.

The software in the memory 920 may include one or more separate programs, each of which comprises an ordered listing of executable instructions for implementing logical functions. The software in the memory 920 includes a suitable operating system (O/S) 950, compiler 960, source code 970, and one or more applications 980 in accordance with exemplary embodiments. As illustrated, the application 980 comprises numerous functional components for implementing the features and operations of the exemplary embodiments. The application 980 of the computer 900 may represent various applications, computational units, logic, functional units, processes, operations, virtual entities, and/or modules in accordance with exemplary embodiments, but the application 980 is not meant to be a limitation.

The operating system 950 controls the execution of other computer programs, and provides scheduling, input-output control, file and data management, memory management, and communication control and related services. It is contemplated by the inventors that the application 980 for implementing exemplary embodiments may be applicable on all commercially available operating systems.

Application 980 may be a source program, executable program (object code), script, or any other entity comprising a set of instructions to be performed. When a source program, then the program is usually translated via a compiler (such as the compiler 960), assembler, interpreter, or the like, which may or may not be included within the memory 920, so as to operate properly in connection with the O/S 950. Furthermore, the application 980 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, NET, and the like.

The I/O devices 930 may include input devices such as, for example but not limited to, a mouse, keyboard, scanner, microphone, camera, etc. Furthermore, the I/O devices 930 may also include output devices, for example but not limited to a printer, display, etc.

Finally, the I/O devices 930 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 930 also include components for communicating over various networks, such as the Internet or intranet.

If the computer 900 is a PC, workstation, intelligent device or the like, the software in the memory 920 may further include a basic input output system (BIOS) (omitted for simplicity). The BIOS is a set of essential software routines that initialize and test hardware at start-up, start the O/S 950, and support the transfer of data among the hardware devices. The BIOS is stored in some type of read-only-memory, such as ROM, PROM, EPROM, EEPROM or the like, so that the BIOS can be executed when the computer 900 is activated.

When the computer 900 is in operation, the processor 910 is configured to execute software stored within the memory 920, to communicate data to and from the memory 920, and to generally control operations of the computer 900 pursuant to the software. The application 980 and the O/S 950 are read, in whole or in part, by the processor 910, perhaps buffered within the processor 910, and then executed.

When the application 980 is implemented in software it should be noted that the application 980 can be stored on virtually any computer readable medium for use by or in connection with any computer-related system or method. In the context of this document, a computer readable medium may be an electronic, magnetic, optical, or other physical device or means that can contain or store a computer program for use by or in connection with a computer related system or method.

The application 980 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed method(s), device(s) and/or system(s) may be implemented in hardware or software, or a mixture of both (for example, as firmware running on a hardware device). To the extent that an embodiment is implemented partly or wholly in software, the functional steps illustrated in the process flow diagrams may be performed by suitably programmed physical computing devices, such as one or more central processing units (CPUs) or graphics processing units (GPUs). Each process - and its individual component steps as illustrated in the flow diagrams - may be performed by the same or different computing devices. According to embodiments, a computer-readable storage medium stores a computer program comprising computer program code configured to cause one or more physical computing devices to carry out a control method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, some of the blocks shown in the block diagrams may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to provide an advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flow diagrams and block diagrams in the Figures illustrate the architecture, functionality, and operation of possible implementations of systems, methods, and computer program products according to various embodiments of the present invention. In this regard, each block in the flow diagrams or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flow diagrams and combinations of blocks in the block diagrams and/or flow diagrams, can be implemented by special purpose hardware-based systems that perform the specified functions or acts or carry out combinations of special purpose hardware and computer instructions.

## Claims

1. A method for generating a coronary segmentation of a heart of a subject, comprising:
- obtaining (110) a coronary angiography image of at least a part of the heart of the subj ect;
- obtaining (120) probabilistic maps describing expected paths of a plurality of vessels of the heart of the subject, and expected vessel endpoint regions of the plurality of vessels;
- generating (130) a coronary segmentation based on the coronary angiography image and the probabilistic maps, wherein the coronary segmentation represents a detected path of a plurality of vessels of the subject, and detected vessel endpoint regions of the plurality of vessels; and
- assigning (140), based on the probabilistic maps, for vessels amongst the plurality of vessels of the coronary segmentation, a likelihood value indicating whether the detected vessel endpoint of the respective vessel represents an actual endpoint location of the respective vessel.

2. The method of claim 1, wherein obtaining the probabilistic maps comprises generating (125) the probabilistic maps.

3. The method of claim 2, wherein generating (125) the probabilistic maps is based on a coronary atlas describing probable paths of the plurality of vessels of the heart, and probable vessel endpoint regions of the plurality of vessels.

4. The method of claim 3, wherein generating (125) the probabilistic maps comprises processing (121) the coronary atlas using the coronary angiography image.

5. The method of claim 3 or 4, further comprising generating (121) a coronary atlas by mapping a dataset of a plurality of hearts of a population onto a common coordinate system, wherein items in the dataset describe paths of a plurality of vessels and vessel endpoint regions of the plurality of vessels.

6. The method of any of claims 2-5, wherein generating (125) the probabilistic maps is based, at least in part, on a location of one or more grafts of the heart of the subject.

7. The method of claim 6, further comprising identifying (123) the location of the grafts in the coronary angiography image, and optionally wherein identifying the location of the one or more grafts of the heart of the subject comprises identifying the location of an aortic protrusion, a direction of a left/right internal mammary artery, and/or a direction of a left/right internal thoracic artery.

8. The method of any of claims 2-7, wherein generating (125) the probabilistic maps is based on a location of one or more metal clips in the heart of the subject.

9. The method of claim 8, further comprising identifying (124) the location of the metal clips in the coronary angiography image.

10. The method of any of claims 1-9, wherein assigning (140) the likelihood value, for the plurality of detected vessels, comprises:
- comparing (142) the detected vessel endpoint of the respective vessel to the expected vessel endpoint region of the respective vessel; and
- generating (144) the likelihood value based on a result to the comparison.

11. The method of any of claims 1-10, wherein generating (130) the coronary segmentation comprises:
- processing (132), with a segmentation algorithm, the coronary angiography image to generate the coronary segmentation, and wherein:
- the segmentation algorithm is modified based on the probabilistic maps; and/or
- the coronary segmentation of the heart is modified based on the probabilistic maps.

12. The method of claim 11, wherein the segmentation algorithm is based on at least one of tracing, region growing, and/or voxel classification.

13. The method of any of claims 1-12, wherein the coronary angiography image is a spectral CT image or a photon counting CT image.

14. A computer program comprising computer program code which is adapted, when said program is run on a computer, to implement the method of any one of claims 1-13.

15. A system (200) for generating a coronary segmentation of a heart of a subject, comprising:
- an interface unit (210) configured to:
- obtain a coronary angiography image of at least a part of the heart of the subject; and
- obtain probabilistic maps describing expected paths of a plurality of vessels of the heart of the subject, and expected vessel endpoint regions of the plurality of vessels;
- a segmentation unit (220) configured to generate a coronary segmentation based on the coronary angiography image and the probabilistic maps, wherein the coronary segmentation represents a detected path of a plurality of vessels of the subject, and detected vessel endpoint regions of the plurality of vessels; and
- an annotation unit (230) configured to assign, based on the probabilistic maps, for vessels amongst the plurality of vessels of the coronary segmentation, a likelihood value indicating whether the detected vessel endpoint of the respective vessel represents an actual endpoint location of the respective vessel.
